# EUROPÄISCHE PATENTSCHRIFT

(11) **EP 3 247 166 B1**
(45) Veröffentlichungstag und Bekanntmachung des Hinweises auf die Patenterteilung: **20.03.2019**
(21) Anmeldenummer: 17170577.5
(22) Anmeldetag: 11.05.2017
(51) Int. Cl.: H04W 76/00

(54) **VERFAHREN UND ANORDNUNG ZUR AUSGABE VON WARNMELDUNGEN**
METHOD AND APPARATUS FOR OUTPUTTING ALERT MESSAGES
PROCÉDÉ ET DISPOSITIF DESTINÉS À DÉLIVRER DES MESSAGES D'AVERTISSEMENT

(30) Priorität: 20.05.2016 DE 102016208695
(43) Veröffentlichungstag der Anmeldung: 22.11.2017
(73) Patentinhaber: Siemens Schweiz AG, 8047 Zürich (CH)
(72) Erfinder: Zechlin, Oliver, 6300 Zug (CH)
(74) Vertreter: Maier, Daniel Oliver

(56) Entgegenhaltungen:
- EP-A1- 2 919 213
- DE-A1-102009 045 977
- US-A1- 2009 163 170
- US-A1- 2012 290 150
- US-A1- 2015 199 896

## Beschreibung

Die Erfindung betrifft Verfahren und eine Anordnung zur Ausgabe von Warnmeldungen auf ein mobiles Kommunikationsendgerät eines Benutzers.

In Gebäuden, Campusanlagen, aber auch im sonstigen öffentlichen Raum gibt es baulich- oder ausstattungsbedingte "Stolperstellen" bzw. Gefahrenpunkte welche zu Unfällen mit Personenschaden führen können.

Diese Stellen werden, wenn überhaupt, mit Schildern und/oder Warnfarben signalisiert. Beispiel: Farbstreifen an Treppenstufen oder hinweisende Texte wie "Vorsicht Stufe". Im öffentlichen Raum werden z.B. für Sehbehinderte Signaltöne an Ampelanlagen eingesetzt.

Die europäische Patentanmeldung EP2919213A1 offenbart ein System und eine Methode zur Lokalisierung portabler Geräte und zur Selektiven Aktivierung eines Alarms dieser Geräte durch einen Alarmserver durch Senden einer entsprechenden Alarmmeldung.

Die amerikanische Patentanmeldung US20120290150A1 offenbart ein Verfahren zur Bereitstellung von Ortsinformationen bekannt, bei dem ein straßengebundener Marker z.B. ein RFID Transponder durch ein Sender-Gerät im Fahrzeug wie ein mobiles bzw. drahtloses Kommunikationsgerät z.B. ein Smartphone angeregt wird, seine eindeutige ID und andere Informationen zu senden, woraufhin ein Empfänger die Information nutzen kann, um z.B. Warnungen vor Gefahrenstellen auf der Straße zu erzeugen. Die Informationen können dabei den IDs zugeordnet in einer Datenbank abgelegt sein.

Insbesondere kann die Nutzung von Smartphones oder anderen Kommunikationsendgeräten im Strassenverkehr zu Unachtsamkeit und damit zu Unfällen führen. So gibt es in einigen Städten Modellversuche mit Bodenampeln oder LED-Leuchten entlang des Bordsteins, die am Fussgängerübergang blinken, wenn eine Fussgängerampel auf Rot schaltet, oder wenn sich eine Strassenbahn nähert.

Diese Modellversuche sind bisher nur sporadisch feststellbar und sie erfordern ausserdem aufwändige Infrastrukturmassnahmen zu ihrer Realisierung.

Es ist daher die Aufgabe der vorliegenden Erfindung, kostengünstige Verfahren und eine kostengünstige Anordnung zur Vermeidung von Unfällen von Smartphone Benutzern im öffentlichen Raum bereitzustellen.

Die Aufgabe wird gelöst durch ein Verfahren nach Anspruch 1, insbesondere ein Verfahren zur Ausgabe von Warnmeldungen auf ein mobiles Kommunikationsendgerät eines Benutzers, wobei es sich bei den Warnmeldungen um Warnungen vor potentiellen Gefahren in einer unmittelbaren räumlichen Umgebung des mobilen Kommunikationsendgerätes handelt, das Verfahren umfassend die folgenden Schritte:
- Aussenden einer Warnmeldung durch eine sich in der räumlichen Umgebung der potentiellen Gefahr befindlichen Sendevorrichtung (z.B. iBeacon, WLAN);
- Empfangen der Warnmeldung durch eine Empfangseinrichtung des mobilen Kommunikationsendgerätes; und
- Ausgeben der Warnmeldung durch das mobile Kommunikationsendgerät auf eine geeignete Ausgabevorrichtung (z.B. Display des mobilen Kommunikationsendgerätes, Lautsprecher, Headset, Datenbrille). Die Warnmeldungen können sich in einem Speicher (z.B. Flash-Speicher) der Sendevorrichtung befinden oder in einer Datenbank, auf die die Sendevorrichtung Zugriff hat.

Die Warnmeldungen können somit direkt von der Sendevorrichtung auf dem mobilen Kommunikationsendgerät des Benutzers zur Ausgabe bereitgestellt werden.

Eine erste vorteilhafte Ausgestaltung der Erfindung liegt darin, dass das Ausgeben der Warnmeldung basierend auf Sensorwerten erfolgt, die von einer im mobilen Kommunikationsendgerät befindlichen Sensorik (z.B. Accelerometer, Magnetometer, Gyroskop, Barometer, Näherungssensor) bereitgestellt werden. Damit wird sichergestellt, dass ein Benutzer nicht mit unnötigen Warnmeldungen überflutet wird. Wenn ein Benutzer sein Smartphone nicht aktiv benutzt (z.B. Nachrichten bearbeitet) wird er auch keine Warnmeldungen erhalten. Eine auf dem mobilen Kommunikationsendgerät befindliche Software (z.B. App) kann die aktuellen Messwerte der Sensorik auswerten und damit die Ausgabe einer Warnmeldung zulassen oder unterdrücken.

Eine weitere vorteilhafte Ausgestaltung der Erfindung liegt darin, dass das Ausgeben der Warnmeldung basierend auf der aktuellen Position (durch aktive / passive Positionsbestimmung) des mobilen Kommunikationsendgerätes erfolgt. Auch dadurch wird sichergestellt, dass ein Benutzer nicht mit unnötigen Warnmeldungen überflutet wird. Ausserdem können dediziert in Abhängigkeit der jeweils aktuellen Position des Benutzers zugelassen oder unterdrückt werden.

Ein Aspekt der Erfindung liegt darin, dass, basierend auf der aktuellen Position des mobilen Kommunikationsendgerätes, Informationen zur jeweiligen unmittelbaren räumlichen Umgebung des mobilen Kommunikationsendgerätes von einer Datenbank abgerufen werden und daraus ein Gefährdungskontext ermittelt wird, und wobei das Ausgeben der Warnmeldung basierend auf dem Gefährdungskontext erfolgt. So kann z.B. ein Gefährdungskontext mit evtl. unterschiedlichen Warnstufen (Dringlichkeit) ermittelt werden.

Ein weiterer Aspekt der Erfindung liegt darin, dass bei der Ermittlung des Gefährdungskontextes auch persönliche Daten wie z.B. Grösse, Gewicht, oder Behinderungen des Benutzers (z.B. Beeinträchtigungen bezgl. Hören, Sehen, Gehen oder Farbenblindheit) berücksichtigt werden. Somit können die Warnmeldungen noch granularer abgestimmt ausgegeben werden.

Eine weitere vorteilhafte Ausgestaltung der Erfindung liegt darin, dass das Ausgeben der Warnmeldung basierend auf vom Benutzer voreingestellten Parametern (z.B. durch App-Parameter, Benutzerprofil-Eintrag auf Server; Facebook-Einstellungen) erfolgt. Somit kann das Ausgeben der Warnmeldung benutzerbezogen, d.h. basierend auf einem vom Benutzer definierten Profil erfolgen.

Ein weiterer Aspekt der Erfindung liegt darin, dass das Ausgeben der Warnmeldung nur bei einem aktiven Gebrauch des Kommunikationsendgerätes durch den Benutzer erfolgt. Nur in solchen Situationen ist der Benutzer abgelenkt. Somit ist sichergestellt, dass der Benutzer keine unnötigen Warnmeldungen erhält. Durch Sensorik des Kommunikationsendgerätes wird erkannt, ob das Gerät aktuell in Verwendung ist.

Eine weitere vorteilhafte Ausgestaltung der Erfindung liegt darin, dass die Warnmeldung vom Kommunikationsendgerät (MG) eines Benutzers auf ein Kommunikationsendgerät eines weiteren Benutzers weitergeleitet wird. Dies kann z.B. über ein gemeinsames soziales Netzwerk (z.B. Facebook) oder über einen entsprechenden Messenger-Dienst (z.B. Twitter, WhatsApp) erfolgen.

Die Aufgabe wird ebenfalls gelöst durch eine Anordnung nach Anspruch 6.

Die Anordnung lässt sich mit handelsüblichen Vorrichtungen bzw. Geräten realisieren (z.B. handelsübliche Funksender als Sendevorrichtung und handelsüblichen Smartphones), mit entsprechender Software.

Die Aufgabe wird insbesondere gelöst durch eine Anordnung zur Ausgabe von Warnmeldungen auf ein mobiles Kommunikationsendgerät (z.B. Smartphone, Tablet-Computer) eines Benutzers, wobei es sich bei den Warnmeldungen um Warnungen vor potentiellen Gefahren in einer unmittelbaren räumlichen Umgebung des mobilen Kommunikationsendgerätes handelt, die Anordnung umfassend:
- eine Sendevorrichtung (z.B. Funk-Beacon) eingerichtet zum Aussenden einer Warnmeldung bezüglich einer sich in der räumlichen Umgebung der Sendevorrichtung befindlichen potentiellen Gefahr und/oder eingerichtet zum Aussenden eines der Sendevorrichtung zugeordneten Identifizierungscodes, wobei die Sendevorrichtung weiter eingerichtet ist, in der räumlichen Umgebung der Sendevorrichtung befindliche mobile Kommunikationsendgeräte zu erkennen;
- ein mobiles Kommunikationsendgerät, eingerichtet zum Empfangen einer Warnmeldung und/oder des Identifizierungscodes, und eingerichtet zum Ausgeben der empfangenen Warnmeldung, und/oder eingerichtet zum Ausgeben einer dem Identifizierungscode zugeordneten Warnmeldung; und
- eine Ausgabevorrichtung (z.B. Smartphonedisplay, Lautsprecher, Headset, Datenbrille) zum Ausgeben der Warnmeldung. Die Anordnung kann durch handelsübliche Mittel realisiert werden und leicht in eine bestehende Infrastruktur integriert werden. Statische Warnhinweise an gefährlichen Stellen können somit ersetzt oder ergänzt werden durch dynamische Warnmeldungen, die nur auf den Kommunikationsendgeräten von potentiell betroffenen Benutzern ausgegeben werden.

Eine weitere vorteilhafte Ausgestaltung der Erfindung liegt darin, dass die Anordnung eine Lokalisierungsvorrichtung zum Bestimmen der aktuellen Position des mobilen Kommunikationsendgerätes umfasst, wobei eine Ausgabe der Warnmeldung nur erfolgt, wenn sich das mobile Kommunikationsendgerät in einer vorher festgelegten Entfernung zur Sendevorrichtung befindet. Dadurch wird sichergestellt, dass Warnmeldungen nur an Benutzer ausgegeben werden, die sich mit ihren Kommunikationsendgeräten in der Nähe oder am Ort einer möglichen Gefahrensituation (z.B. Fussgängerüberweg) befinden. Mit Vorteil wird die Entfernung des Kommunikationsendgerätes zur Sendevorrichtung durch ein Lokalisierungssystem (z.B. GPS) ermittelt. Die vorher festgelegte Entfernung kann als Einstellungsparameter in der Sendevorrichtung hinterlegt sein oder in einem Datenbankeintrag eines Webservers der mit dem Kommunikationsendgerät z.B. über eine geeignete Internetverbindung verbunden ist.

Eine weitere vorteilhafte Ausgestaltung der Erfindung liegt darin, dass die Anordnung eine Bereitstellungsvorrichtung (z.B. Datenbank, Web-Server) zum Bereitstellen von Informationen zu einer jeweiligen räumlichen Umgebung einer jeweiligen Sendevorrichtung; und/oder zum Zuordnen einer Warnmeldung zu einem Identifizierungscode umfasst, wobei die Bereitstellungsvorrichtung dazu eingerichtet ist, über geeignete Kommunikationsmechanismen mit dem mobilen Kommunikationsendgerät zu kommunizieren. Somit können weitere Informationen, die sich auf der Datenbank oder dem Web-Server befinden bei der Bereitstellung der Warnmeldung berücksichtigt werden.

Ein Aspekt der Erfindung liegt darin, dass die Anordnung eine Bestimmungsvorrichtung zur Bestimmung eines Gefährdungskontextes basierend auf der aktuellen Position des mobilen Kommunikationsendgerätes und den Informationen zu der jeweiligen räumlichen Umgebung umfasst, wobei das Ausgeben der Warnmeldung basierend auf dem Gefährdungskontext erfolgt. So kann z.B. ein abgestimmter Gefährdungskontext mit evtl. unterschiedlichen (skalierten) Warnstufen (z.B. bezüglich der Dringlichkeit) ermittelt werden.

Eine weitere vorteilhafte Ausgestaltung der Erfindung liegt darin, dass die erfindungsgemässe Anordnung Teil eines Gebäudeautomatisierungssystems oder eines Überwachungssystems für Gebäude und/oder definierte Bereiche ist. Moderne Gebäude sind heutzutage oft mit Gebäudeautomatisierungssystemen bzw. Überwachungs- oder Sicherheitssystemen ausgestattet. Durch die Integration oder Anbindung der erfindungsgemässen Anordnung in solche Systeme wird die Sicherheit der Benutzer eines Gebäudes oder Campus (z.B. Bewohner, Angestellte) erhöht.

Eine weitere vorteilhafte Ausgestaltung der Erfindung liegt darin, dass das mobile Kommunikationsendgerät eingerichtet ist, die Warnmeldung an ein weiteres mobiles Kommunikationsendgerät weiterzuleiten. Dies kann über eine geeignete Kommunikationsverbindung (z.B. Funk, Infrarot soziale Netzwerkplattform) erfolgen.

Die Erfindung sowie vorteilhafte Ausführungen der vorliegenden Erfindung werden am Beispiel der nachfolgenden Figuren erläutert. Dabei zeigen:
- FIG 1: eine erste beispielhafte Anordnung zur Ausgabe von Warnmeldungen auf ein mobiles Kommunikationsendgerät eines Benutzers,
- FIG 2: ein erstes beispielhaftes Flussdiagramm für ein Verfahren zur Ausgabe von Warnmeldungen auf ein mobiles Kommunikationsendgerät eines Benutzers,
- FIG 3: ein zweites beispielhaftes Flussdiagramm für ein Verfahren zur Ausgabe von Warnmeldungen auf ein mobiles Kommunikationsendgerät eines Benutzers, und
- FIG 4: eine zweite beispielhafte Anordnung zur Ausgabe von Warnmeldungen auf ein mobiles Kommunikationsendgerät eines Benutzers.

Auf Grund der zunehmenden Nutzung von Kommunikationsendgeraten, und der damit verbundenen Konzentration der Benutzer auf diese, wie z.B. auf ein Smartphone, wird das Umfeld durch die Benutzer nur noch eingeschränkt wahrgenommen. Das erfindungsgemässe Verfahren erhöht die Sicherheit von Nutzern von Kommunikationsendgeraten (z.B. Smartphones, wearables, implants, Tablet-Computer) als auch von körperlich eingeschränkten Menschen in Gebäuden, Campusanlagen oder im öffentlichen Raum (z.B. für Fussgänger). Durch eine Einblendung von Warnmeldungen und/oder Warnsignalen (z.B. Warn-Icon) oder anderweitige entsprechende Signalisierung auf durch die vom Nutzer verwendeten tragbaren Technologien bzw. Geräten, wird die Aufmerksamkeit des Nutzers auf eine bevorstehende "Stolperstelle" gelenkt. Durch die Nutzung von Warnsendern, idealerweise unter Verbindung von weiterer nutzerseitig vorhandener Sensorik und Informationen, kann personalisiert bzw. profiliert gewarnt werden. So kann z.B. "Warn-Spam" vermieden werden, und auf persönliche Bedürfnisse und Fähigkeiten des Nutzers eingegangen werden.

Die bisher statischen Warnungen (z.B. Farbmarkierung; Schild) werden durch dynamische, durch digitale, und durch erweiterte Warnnotifikationen dem digitalen Gebäude bzw. dem digitalen Campus oder einem digitalen öffentlichen Raum gerecht, und helfen Unfälle zu vermeiden, wenn die Benutzer durch ihre Kommunikationsendgeräte abgelenkt sind.

Die erfindungsgemässen Verfahren und die erfindungsgemässe Anordnung zur Unfallvermeidung sind mit geringem Investment realisierbar.

Sind die infrastrukturell genutzten Sender/Sendeeinrichtungen dynamisch ansprechbar (d.h. es können von extern (Cloud etc.) Befehle entgegengenommen werden um spezifische Warnungen, oder Warnungstrigger auszugeben, ist weiterhin eine Nutzung als lokale generische Notifikationslösung möglich: so kann bei Vorhandensein einer solchen Infrastruktur diese als Alarmierungsanlage im Falle eines terroristischen Angriffs etc. genutzt werden.

In Gebäuden, Campusanlagen als auch im sonstigen öffentlichen Raum gibt es baulich- oder ausstattungsbedingte "Stolperstellen" und/oder Gefahrenpunkte welche zu Unfällen mit Personenschaden führen können. Bei oder an potentiellen "Stolperstellen", als Beispiel seien Treppen oder auch nicht selbstöffnende Türen genannt, wird ein Funkmelder (z.B. Bluetooth Beacon) und/oder Lichtsender (z.B. LED) und/oder akustische Sendeeinrichtung (z.B. Lautsprecher) platziert. Dieser Sender oder Kombination von Sendeeinrichtungen überträgt bzw. übertragen ein wahlfreies aber definiertes Signal (z.B. Identifikationscode oder Meldung mit semantischem Inhalt), z.B. durch NFC (Near Field Communication) oder WLAN auf ein in der Nähe befindliches Kommunikationsendgerät (z.B. Smartphone) eines Benutzers oder durch geeignete Kommunikationsmechanismen (z.B. Datenfernübertragung) auf einen Server bzw. Cloud. Mit Vorteil stammt das Signal aus einer Datenbank. Vorstellbar ist ebenfalls ein standardisiertes Signal. Das Signal wird vom nutzerseitigen Kommunikationsendgerät erfasst, intern und/oder extern verarbeitet, und bei entsprechendem Vorhandensein einer entsprechenden Applikation oder Dienst durch eine entsprechende Notifikation auf dem Kommunikationsendgerät, oder damit verbundenen Komponenten (z.B. Headset, Datenbrille (z.B. Google Glass) ausgegeben. Als Signalisierungsbeispiel sei eine visuelle Einblendung genannt, wie "Vorsicht Stufe" (optional mit Entfernungsangabe, und/oder weiteren kontextuellen Informationen).

Eine solche Einblendung wird mit Vorteil über eine genutzte Anwendung (z.B. Facebook oder andere Social-Media-Anwendung) dargestellt. Notifikationen können auch direkt im System des Kommunikationsendgerätes integriert sein, ohne eine zusätzliche App oder Service installieren zu müssen. Weiterhin sind Notifikationen vom Anwender optional aktivierbar bzw. deaktivier-bar, sowie weitere Einstellungen möglich (z.B. wenn in Nähe von x Warnung in Form von y in Zeiten von z). So kann z.B. eine Notifikation des Benutzers basierend auf vordefinierten und hinterlegten Regeln erfolgen, durch fallbasiertes Schliessen (CBR, case-based reasoning) mit Hilfe einer entsprechenden Regelmaschine (Rule Engine).

Um aufmerksame Nutzer nicht durch zu viele Warnungen (z.B. an jeder Treppe pro Stockwerk bei Herunterlaufen im Treppenhaus) abzulenken oder zu verärgern, ist es empfohlen die endgeräteseitig zur Verfügung stehende Sensorik (z.B. Accelerometer, Magnetometer, Gyroskop, Barometer, Näherungssensor) mit einzubeziehen.

Beispiel: Ein Smartphone wird aktiv während der laufenden Fortbewegung in einem Gebäude genutzt, d.h. eine oder mehrere Faktoren kamen zum Tragen: Display ist an, CPU Last ist höher als im normalen stand-by-Betrieb, es wird im Winkelbereich x-y gehalten oder mit einem Abstand z zum Gesicht des Anwenders (z. B. durch Frontkamera erkennbar), mit einer wahrnehmbaren Geschwindigkeit (Beschleunigungssensor; Kompass; ...), Touchscreen-Bedienung ist aktiv, eine "core location engine" (Vorrichtung zum Erkennen der üblichen Hauptposition eines Benutzers oder Gerätes) nimmt Positionsänderung wahr, laufende Signalstärkeänderungen (z.B. WLAN, Bluetooth, 2G/3G/xG) werden erkannt, oder Kamera nimmt Umgebung auf. Wird vom Kommunikationsendgerät oder einer "in der Cloud" stattfindenden Berechnung eine Positionsänderung des Kommunikationsendgerätes wahrgenommen, macht es Sinn die Warnungs-Notifikationen zu aktivieren und dem Anwender geeignet zu präsentieren (z.B. als Warnmeldung auf dem Display des Kommunikationsendgerätes). Mit Vorteil erfolgt eine Kombination aus mehreren Berechnungsmöglichkeiten um die Genauigkeit zu verbessern.

Das System arbeitet noch genauer wenn eine aktive oder passive Positionierung, d.h. Lokalisierung des Kommunikationsendgerätes stattfindet. D.h. ein Kommunikationsendgerät macht sporadisch oder laufende Aktualisierungen seiner Position unter Nutzung einer oder mehrerer dafür geeigneter Technologien, wie z.B. GPS, BT, WLAN, cellular, Sensoren (z.B. Bewegungssensoren oder Präsenzsensoren), Kameras. Die Lokalisierung des Kommunikationsendgerätes kann auf dem Kommunikationsendgerät selbst erfolgen (d.h. on-device, mit entsprechenden Bordmitteln) oder mit Hilfe von physikalisch und/oder nicht-physikalisch mit dem Kommunikationsendgerät verbundener Komponenten und/oder durch einen entsprechend ausgestatteten Server (off-device).

Die erfassten Positionen können dann mit einer Datenbank welche Informationen zum Umfeld enthalt abgeglichen werden. So kann ein Gefährdungskontext mit evtl. unterschiedlichen Warnstufen (Dringlichkeit) ermittelt werden.

Sind aus einer z.B., BIM-Datenbank (Building Information Model, Gebäudedatenmodellierung) auch weiterführende kontextuelle Daten zum Umfeld bekannt (z.B. Attribut Treppe, evtl. Stufenanzahl/Höhe/Material; oder z.B. Türrahmen mit Öffnungshöhe (z.B. tiefer als Norm), oder externe Datenquellen verfügbar (z.B. Unfallversicherung; Betriebsarzt), oder auch persönliche Daten des Anwenders (z.B. Körpergrösse x, keine Behinderungen), kann noch granularer abgestimmt gewarnt werden.

Somit ist es möglich, abhängig von der jeweiligen Situation und der physischen Kenngrössen des jeweiligen Benutzers, abgestimmte bzw. skalierbare Warnmeldungen auszugeben.

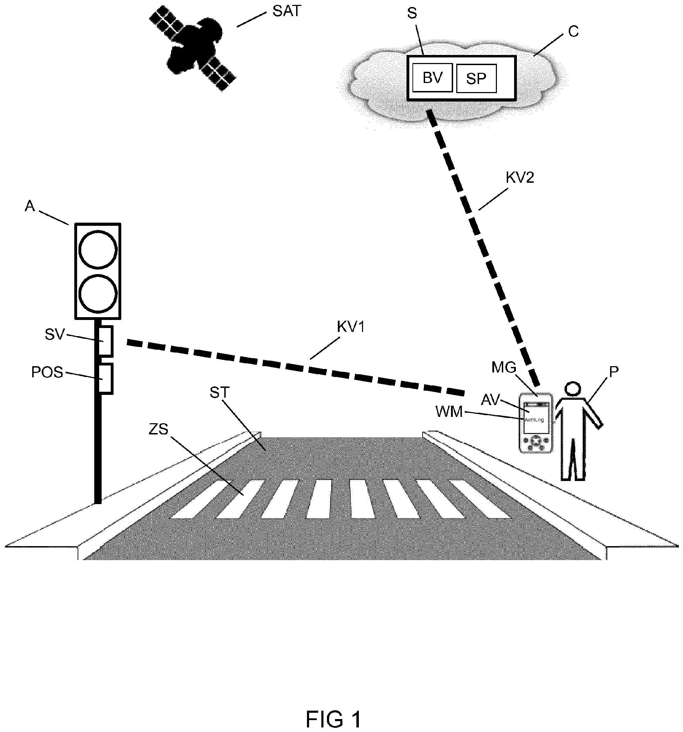

Figur 1 zeigt eine erste beispielhafte Anordnung zur Ausgabe von Warnmeldungen WM auf ein mobiles Kommunikationsendgerät MG eines Benutzers P, wobei es sich bei den Warnmeldungen WM um Warnungen vor potentiellen Gefahren in einer unmittelbaren räumlichen Umgebung des mobilen Kommunikationsendgerätes MG handelt. Die Anordnung umfasst eine Sendevorrichtung SV eingerichtet zum Aussenden einer Warnmeldung WM bezüglich einer sich in der räumlichen Umgebung der Sendevorrichtung SV befindlichen potentiellen Gefahr und/oder eingerichtet zum Aussenden eines der Sendevorrichtung zugeordneten Identifizierungscodes, wobei die Sendevorrichtung weiter eingerichtet ist, in der räumlichen Umgebung der Sendevorrichtung SV befindliche mobile Kommunikationsendgeräte MG zu erkennen; ein mobiles Kommunikationsendgerät MG, eingerichtet zum Empfangen einer Warnmeldung WM und/oder des Identifizierungscodes, und eingerichtet zum Ausgeben der empfangenen Warnmeldung WM, und/oder eingerichtet zum Ausgeben einer dem Identifizierungscode zugeordneten Warnmeldung WM; und eine Ausgabevorrichtung AV zum Ausgeben der Warnmeldung WM.

Beim mobilen Kommunikationsendgerät MG kann es sich z.B. um ein Smartphone, ein Tablet, einen Laptop, oder ein Wearable-Gerät (Wearable Computer, tragbare Datenverarbeitung), wie z.B. Smartwatch oder Smartglasses (Datenbrille) handeln. Mit Vorteil handelt es sich bei der Sendevorrichtung SV um eine Sendevorrichtung zum Aussenden von Funksignalen. Bluetooth Beacons oder WLAN kann dafür verwendet werden. Bei der Ausgabevorrichtung AV kann es sich z.B. um ein Display des Kommunikationsendgerätes MG handeln, es kann aber auch auf einem Headset oder auf einer Datenbrille eine Ausgabe erfolgen. Mit Vorteil erfolgt eine Ausgabe auf mehreren Ausgabevorrichtungen AV. Es ist prinzipiell auch möglich, dass die Ausgabe einer Warnmeldung WM auf einem öffentlichen Bildschirm (z.B. Display, welches üblicherweise für Werbeanzeigen) in der räumlichen Umgebung erfolgt.

Mit Vorteil umfasst die Anordnung eine Lokalisierungsvorrichtung POS, SAT zum Bestimmen der aktuellen Position des mobilen Kommunikationsendgerätes MG, wobei eine Ausgabe der Warnmeldung WM nur erfolgt, wenn sich das mobile Kommunikationsendgerät MG in einer vorher festgelegten Entfernung zur Sendevorrichtung SV befindet. Bei der Lokalisierungsvorrichtung kann es sich um ein satellitengestütztes Positionsbestimmungssystem (GPS) SAT handeln oder um ein IPS (Indoor Positioning System) POS, z.B. Bluetooth Beacons. Indoor-Positioning-Systeme sind heutzutage schon weit verbreitet und leicht in einem Gebäude oder auch ausserhalb eines Gebäudes installierbar, z.B. Pseudolit-GPS, WLAN Netze oder Bluetooth-Beacons. Die Positionsbestimmung innerhalb von WLAN Netzen kann z.B. durch Trilateration oder durch Fingerprinting erfolgen. Die Lokalisierung kann durch aktive oder passive Positionsbestimmung erfolgen.

Mit Vorteil umfasst die Anordnung eine Bereitstellungsvorrichtung S zum Bereitstellen von Informationen zu einer jeweiligen räumlichen Umgebung einer jeweiligen Sendevorrichtung SV; und/oder zum Zuordnen einer Warnmeldung WM zu einem Identifizierungscode, wobei die Bereitstellungsvorrichtung S dazu eingerichtet ist, über geeignete Kommunikationsmechanismen KV2 mit dem mobilen Kommunikationsendgerät MG zu kommunizieren. Bei der Bereitstellungsvorrichtung S handelt es sich z.B. um einen Web-Server in einer Cloud C. Die Bereitstellungsvorrichtung S umfasst einen Speicher SP (z.B. Flash-Speicher und/oder eine Datenbank. Als Kommunikationsmechanismus KV2 zur Kommunikation zwischen der Bereitstellungsvorrichtung S (z.B. Web-Server) und dem Kommunikationsendgerät MG des Benutzers P kann z.B. eine Funkverbindung wie z.B. WLAN oder Satellitenkommunikation verwendet werden. Als Kommunikationsmechanismus KV1 zur Kommunikation zwischen der Sendevorrichtung SV (z.B. Funk Beacon, Funkvorrichtung) und dem Kommunikationsendgerät MG des Benutzers P kann z.B. WLAN verwendet werden.

Das Zuordnen der Warnmeldung WM zum Identifizierungscode kann im Kommunikationsendgerät MG (on-device) oder im mit dem Kommunikationsendgerät verbundenen Web-Server S (off-device) erfolgen.

Erfindungsgemäß umfasst der Web-Server S eine Bestimmungsvorrichtung BV zur Bestimmung eines Gefährdungskontextes basierend auf der aktuellen Position des mobilen Kommunikationsendgerätes MG und den Informationen zu der jeweiligen räumlichen Umgebung, wobei das Ausgeben der Warnmeldung WM basierend auf dem Gefährdungskontext erfolgt. Mit Vorteil wird die Bestimmungsvorrichtung BV durch ein entsprechendes Softwareprogramm realisiert. Mit Vorteil umfasst die Bestimmungsvorrichtung BV eine regelbasierte bzw. fallbasierte Maschine, um regel- bzw. fallbasiert eine entsprechende Warnmeldung WM auszugeben.

Die regelbasierte bzw. fallbasierte Maschine ("rule based engine") kann sich auch auf dem Kommunikationsendgerät MG befinden.

Durch die Berücksichtigung des aktuell vorliegenden Gefährdungskontextes wird ein Benutzer nicht mit unnötigen Warnmeldungen WM überflutet. Ohne Nutzung des Endgerätes (z.B. Smartphone) besteht ja auch keine Notwendigkeit für eine Ausgabe einer Warnmeldung WM. Dies macht erst dann Sinn wenn das Kommunikationsendgerät MG und/oder der Webserver S feststellt, dass gerade eine Nutzung vorliegt (z.B. Facebook, App auf, Display an, wird im Winkelbereich x gehalten, evtl. Interaktion; evtl. check durch Frontkamera, etc.).

Eine Sendevorrichtung SV (z.B. Bluetooth Beacon) kann eine Warnmeldung WM direkt auf das Kommunikationsendgerät MG senden, die dann, basierend auf entsprechender Verarbeitungslogik (Position, Regeln, etc.) ausgegeben wird. Die Verarbeitungslogik kann dabei im Webserver S und/oder im Kommunikationsendgerät MG erfolgen.

Eine Sendevorrichtung SV kann aber auch einen Identifizierungscode (z.B. eine ID, die der Sendevorrichtung SV eindeutig zugeordnet ist) an das Kommunikationsendgerät MG senden. Wird der Identifizierungscode durch Datenbankabgleich vom Webserver S (off-device) oder vom Kommunikationsendgerät MG (on-device) erkannt, erfolgt die Ausgabe einer entsprechenden Warnmeldung WM. Mit Vorteil erfolgt die Ausgabe der entsprechenden Warnmeldung WM basierend auf der aktuellen Position des Kommunikationsendgerätes MG und/oder basierend auf hinterlegten Profildaten des Benutzers.

Eine Sendevorrichtung SV kann an das Kommunikationsendgerät MG auch eine URL senden (z.B. Google Eddystone), welche im Kommunikationsendgerät MG eine entsprechend definierte Regel zur Ausgabe einer entsprechenden Warnmeldung WM auslöst.

Mit Vorteil ist die Anordnung in ein Gebäudeautomatisierungssystem oder ein Überwachungssystem für Gebäude und/oder definierte Bereiche integriert. Dadurch kann die Sicherheit der Benutzer in einem Gebäude erhöht werden. Es ist aber auch möglich, dass Benutzer gewarnt werden, wenn diese sich in einer Area aufhalten, für die Zutritt verboten ist ("off-limit-area") oder wenn sie sich einer solchen Area nähern.

In der Darstellung gemäss Figur 1 ist die Anordnung in die räumliche Umgebung einer Strasse ST integriert. Ein Benutzer will die Strasse ST an einem Zebrastreifen ZS überqueren, ist aber durch sein Smartphone MG abgelenkt. Die Sendevorrichtung SV ist an einer Fussgängerampel A angebracht, ebenso ein Lokalisierungssystem POS, z.B. ein Indoor Positioning System.

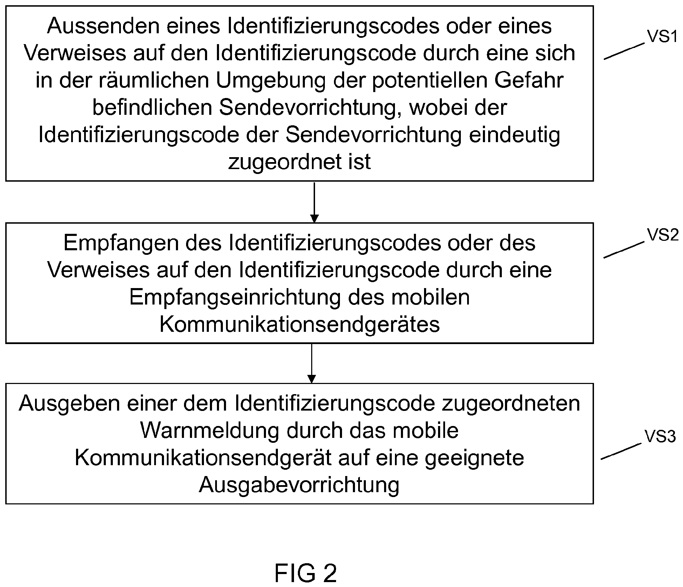

Figur 2 zeigt ein erstes beispielhaftes Flussdiagramm für ein Verfahren zur Ausgabe von Warnmeldungen auf ein mobiles Kommunikationsendgerät eines Benutzers, wobei es sich bei den Warnmeldungen um Warnungen vor potentiellen Gefahren in einer unmittelbaren räumlichen Umgebung des mobilen Kommunikationsendgerätes handelt, das Verfahren umfassend die folgenden Schritte:
(VS1) Aussenden eines Identifizierungscodes oder eines Verweises auf den Identifizierungscode durch eine sich in der räumlichen Umgebung der potentiellen Gefahr befindlichen Sendevorrichtung, wobei der Identifizierungscode der Sendevorrichtung eindeutig zugeordnet ist;
(VS2) Empfangen des Identifizierungscodes oder des Verweises auf den Identifizierungscode durch eine Empfangseinrichtung des mobilen Kommunikationsendgerätes; und
(VS3) Ausgeben einer dem Identifizierungscode zugeordneten Warnmeldung durch das mobile Kommunikationsendgerät auf eine geeignete Ausgabevorrichtung.

Im Verfahren nach Figur 2 erfolgt die Ausgabe der Warnmeldung basierend auf der Zuordnung eines Identifizierungscodes zu der Warnmeldung. Diese Zuordnung kann durch Datenbankabgleich im Kommunikationsendgerät (z.B. Smartphone) erfolgen, d.h. "on-device". Diese Zuordnung kann aber auch durch Datenbankabgleich in einem mit dem Kommunikationsendgerät über ein geeignetes Kommunikationsmedium (z.B. Satellitenfunk, Internet) verbundenen Webserver (befindet sich mit Vorteil in einer Cloud-Infrastruktur) erfolgen.

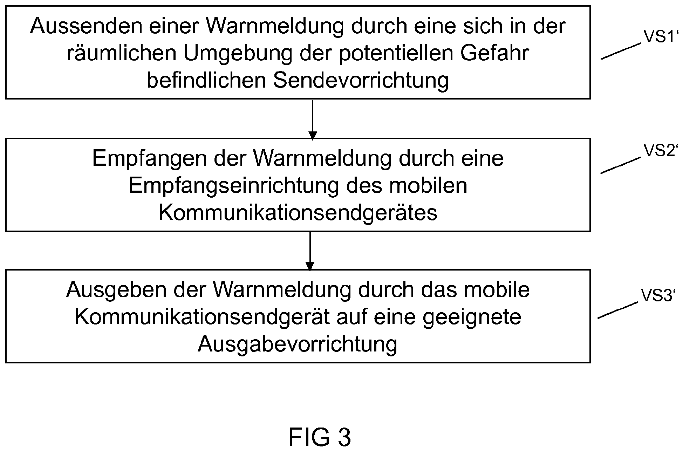

Figur 3 zeigt ein zweites beispielhaftes Flussdiagramm für ein Verfahren zur Ausgabe von Warnmeldungen auf ein mobiles Kommunikationsendgerät eines Benutzers, wobei es sich bei den Warnmeldungen um Warnungen vor potentiellen Gefahren in einer unmittelbaren räumlichen Umgebung des mobilen Kommunikationsendgerätes handelt, das Verfahren umfassend die folgenden Schritte:
(VS1') Aussenden einer Warnmeldung durch eine sich in der räumlichen Umgebung der potentiellen Gefahr befindlichen Sendevorrichtung;
(VS2') Empfangen der Warnmeldung durch eine Empfangseinrichtung des mobilen Kommunikationsendgerätes; und
(VS3') Ausgeben der Warnmeldung durch das mobile Kommunikationsendgerät auf eine geeignete Ausgabevorrichtung. In diesem alternativen Verfahren wird eine Warnmeldung von der Sendevorrichtung direkt auf das Kommunikationsendgerät des Benutzers gesendet. Über entsprechende Verarbeitungslogik (Position, Benutzerprofil, Regeln) erfolgt die Ausgabe der Warnmeldung. Die Verarbeitungslogik kann durch das Kommunikationsendgerät erfolgen und/oder durch einen mit dem Kommunikationsendgerät über ein geeignetes Kommunikationsmedium (z.B. Satellitenfunk, Internet) verbundenen Webserver. Der Webserver befindet sich mit Vorteil in einer Cloud-Infrastruktur.

Die Verfahren nach Figur 2 bzw. Figur 3 können mit handelsüblichen Komponenten (z.B. Smartphone, Funksender, Positionierungssystem, Softwareprogramme, etc.) realisiert werden.

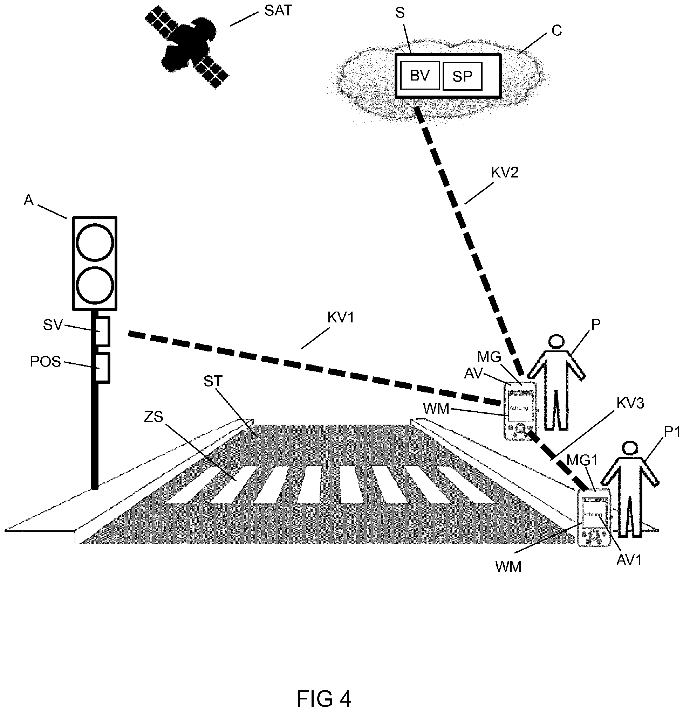

Figur 4 zeigt eine zweite beispielhafte Anordnung zur Ausgabe von Warnmeldungen auf ein mobiles Kommunikationsendgerät eines Benutzers. Die Darstellung gemäss Figur 4 erweitert die Darstellung und die Anordnung gemäss Figur 1 um das Merkmal, dass eine Warnmeldung WM vom mobilen Kommunikationsendgerät MG des Benutzers P auf das mobile Kommunikationsendgerät MG1 eines weiteren Benutzers P1 über eine geeignete Kommunikationsverbindung KV3, z.B. über eine soziales Netzwerk (z.B. Facebook) oder über einen Messenger (z.B. WhatsApp, Twitter) weitergeleitet wird. Dies ist u.a. in Situationen sinnvoll, bei denen eine Person nicht in der Lage ist, eine Warnmeldung sozusagen als Primärmeldung selbst zu empfangen.

### Beispielhaftes Szenario

Sollte eine gefährdete Person (nähert sich einer bekannten Gefahrenstelle; diese kann aktiv eine Bestimmungs-ID aussenden, oder ist datenbanktechnisch erfasst) nicht in der Lage sein eine Warnmeldung bzw. Bestimmungs-ID zu empfangen, z.B. weil das genutzte Kommunikationsendgerät nicht über die benötigte Soft- oder Hardware verfügt, oder diese deaktiviert ist, kann mittels Kommunikationsendgeräten (z.B. Smartphones) in der Nähe befindlicher Dritter eine Warnung an die gefährdete Person ausgelöst werden.

Die Kommunikationsendgeräte in der Nähe befindlicher Dritte, mit entsprechend aktiver Hard-/Software/Service, empfangen die umliegenden Bestimmungs-IDs und/oder gleichen ihre Position mit in einer Datenbank hinterlegten Gefährdungspunkten ab. Damit können die Nutzer dieser Kommunikationsendgeräte vor diesen Gefährdungsstellen gewarnt werden - nicht jedoch die Nutzer ohne entsprechend dafür notwendiger Hardware/Software/Service (z.B. weil Bluetooth deaktiviert ist). Hier greift die Erfindung ein:
Ist die gefährdete Person z.B. in sozialen Netzwerken eingeloggt (z.B. via FaceBook), so wie auch Personen in der Nähe, kann ein solches Netzwerk genutzt werden um den Gefahrenhinweis rechtzeitig an die gefährdete Person zu übertragen (z.B. via FaceBook Messenger). Dies geschieht idealerweise automatisiert. Die Position der einzelnen Personen, bzw. Geräte, wird meist regelmässig an diverse Dienste-Anbieter übermittelt, so dass die Wahrscheinlichkeit, dass Gefährdeter als auch nahe Dritte in einem oder mehreren solche Dienste vertreten sind hoch ist.

Sollte das vom Gefährdeten genutzte Kommunikationsgerät weiterhin oder stattdessen bei den gleichen Hersteller- bzw. OS Diensten registriert sein wie auch die Geräte der in der Nähe befindlichen Dritten kann auch ein solcher Weg zur Ausgabe einer Warnung genutzt werden.

Je mehr Dritte in der Nähe der gefährdeten Person sind desto feingranularer kann die Positionsbestimmung, damit Wahrscheinlichkeit einer Gefährdung, erfolgen. Dies kann mit Hilfe eines Funknetzwerkes (z.B. GSM via Netzwerkbetreiber, oder lokal eines WLAN) erfolgen. Dabei kann bei Vorhandensein von mindestens zwei passenden (z.B. im gleichen Netz befindlichen).

Dritten die Position des Gefährdeten genauer bestimmt werden. Hierbei kann z.B. ein Triangulationsverfahren eingesetzt werden.

Als Grundlage zur Übermittlung eines Warnhinweises ein oder mehrerer Kommunikationsendgerätenutzungsmerkmale gilt z.B. das Halten eines Smartphones im nutzungstypischen Winkelbereich während einer Laufbewegung; Display an; Messenger Anwendung aktiv; Nutzung Tastatur etc.

Je nach Bewertung des Risikos einer potentiellen Gefahrenstelle wird eine Warnung bei als hoch eingestuftem Risiko auch bei einer weniger klaren Nutzungslage ausgegeben. Dies gilt speziell auch bei zeitlich jungen Ereignissen in der näheren Umgebung (z.B. Giftgaswolke) welche noch keine Bewertung und Ablage in einer Gefährdungsdatenbank erhalten haben.

Auf Grund der zunehmenden Nutzung von Kommunikationsendgeräten, und der damit verbundenen Konzentration auf diese - wie z.B. ein Smartphone, wird das Umfeld nur noch eingeschränkt wahrgenommen.

Die erfindungsgemässe Anordnung und die Verfahren erhöhen die Sicherheit von Nutzern von Kommunikationsendgeräten / wearables / implants, als auch körperlich eingeschränkte Menschen in Gebäuden / Campusanlagen oder öffentlichem Raum. Eine Einblendung oder anderweitige Signalisierung auf / durch die vom Nutzer verwendeten tragbaren Technologien lenkt die Aufmerksamkeit auf die bevorstehende "Stolperstelle". Durch die Nutzung von Warnsendern, idealerweise unter Verbindung von weiterer nutzerseitig vorhandener Sensorik und Informationen, kann personalisiert / profiliert gewarnt werden. So kann z.B. "Warn-Spam" vermieden werden, und auf persönliche Bedürfnisse und Fähigkeiten eingegangen werden. Die bisher statischen Warnungen (z.B. Farbmarkierung; Schild) werden durch dynamische, durch digitale, durch erweiterte Warnnotifikationen dem digitalen Gebäude / Campus / öffentlichem Raum gerecht - und helfen Unfälle zu vermeiden. Ein wie im Verfahren beschriebene Optimierung zur Unfallvermeidung ist mit geringem Investment möglich.

Sind die infrastrukturell genutzten Sender/Sendeeinrichtungen dynamisch ansprechbar (d.h. es können von extern (Cloud etc.) Befehle entgegengenommen werden um spezifische Warnungen, oder Warnungstrigger auszugeben, ist weiterhin eine Nutzung als lokale generische Notifikationslösung möglich: so kann bei Vorhandensein einer solchen Infrastruktur diese als Alarmierungsanlage im Falle eines terroristischen Angriffs etc. genutzt werden.

Verfahren und Anordnung zur Ausgabe von Warnmeldungen auf ein mobiles Kommunikationsendgerät eines Benutzers, wobei es sich bei den Warnmeldungen um Warnungen vor potentiellen Gefahren in einer unmittelbaren räumlichen Umgebung des mobilen Kommunikationsendgerätes handelt, wobei eine Sendevorrichtung eingerichtet ist zum Aussenden einer Warnmeldung bezüglich einer sich in der räumlichen Umgebung der Sendevorrichtung befindlichen potentiellen Gefahr und/oder eingerichtet zum Aussenden eines der Sendevorrichtung zugeordneten Identifizierungscodes, wobei die Sendevorrichtung weiter eingerichtet ist, in der räumlichen Umgebung der Sendevorrichtung befindliche mobile Kommunikationsendgeräte zu erkennen; wobei ein mobiles Kommunikationsendgerät, eingerichtet ist zum Empfangen einer Warnmeldung und/oder des Identifizierungscodes, und eingerichtet ist zum Ausgeben der empfangenen Warnmeldung, und/oder eingerichtet zum Ausgeben einer dem Identifizierungscode zugeordneten Warnmeldung auf einer Ausgabevorrichtung.

## Patentansprüche

1. Verfahren zur Ausgabe von Warnmeldungen (WM) auf ein mobiles Kommunikationsendgerät (MG) eines Benutzers (P), wobei es sich bei den Warnmeldungen (WM) um Warnungen vor potentiellen Gefahren in einer unmittelbaren räumlichen Umgebung des mobilen Kommunikationsendgerätes (MG) handelt, das Verfahren umfassend die folgenden Schritte:
Aussenden einer Warnmeldung (WM) durch eine sich in der räumlichen Umgebung der potentiellen Gefahr befindlichen Sendevorrichtung (SV);
Empfangen der Warnmeldung (WM) durch eine Empfangseinrichtung des mobilen Kommunikationsendgerätes (MG); und
Ausgeben der Warnmeldung (WM) durch das mobile Kommunikationsendgerät (MG) auf eine geeignete Ausgabevorrichtung (AV), wobei basierend auf der aktuellen Position des mobilen Kommunikationsendgerätes (MG) Informationen zur jeweiligen unmittelbaren räumlichen Umgebung des mobilen Kommunikationsendgerätes (MG) von einer Datenbank abgerufen werden und daraus ein Gefährdungskontext ermittelt wird, wobei das Ausgeben der Warnmeldung (WM) basierend auf dem Gefährdungskontext erfolgt, wobei bei der Ermittlung des Gefährdungskontextes auch persönliche Daten des Benutzers berücksichtigt werden, und wobei das Ausgeben der Warnmeldung (WM) nur bei einem aktiven Gebrauch des Kommunikationsendgerätes (MG) durch den Benutzer erfolgt.

2. Verfahren nach Anspruch 1, wobei das Ausgeben der Warnmeldung (WM) basierend auf Sensorwerten erfolgt, die von einer im mobilen Kommunikationsendgerät (MG) befindlichen Sensorik bereitgestellt werden.

3. Verfahren nach einem der vorstehenden Ansprüche, wobei das Ausgeben der Warnmeldung (WM) basierend auf der aktuellen Position des mobilen Kommunikationsendgerätes (MG) erfolgt.

4. Verfahren nach einem der vorstehenden Ansprüche, wobei das Ausgeben der Warnmeldung (WM) basierend auf vom Benutzer voreingestellten Parametern erfolgt.

5. Verfahren nach einem der vorstehenden Ansprüche, wobei die Warnmeldung (WM) vom Kommunikationsendgerät (MG) eines Benutzers (P) auf ein Kommunikationsendgerät (MG1) eines weiteren Benutzers (P1) weitergeleitet wird.

6. Anordnung zur Ausgabe von Warnmeldungen (WM) auf ein mobiles Kommunikationsendgerät (MG) eines Benutzers (P), wobei es sich bei den Warnmeldungen (WM) um Warnungen vor potentiellen Gefahren in einer unmittelbaren räumlichen Umgebung des mobilen Kommunikationsendgerätes (MG) handelt, die Anordnung umfassend:
eine Sendevorrichtung (SV) eingerichtet zum Aussenden einer Warnmeldung (WM) bezüglich einer sich in der räumlichen Umgebung der Sendevorrichtung (SV) befindlichen potentiellen Gefahr und/oder eingerichtet zum Aussenden eines der Sendevorrichtung zugeordneten Identifizierungscodes, wobei die Sendevorrichtung (SV) weiter eingerichtet ist, in der räumlichen Umgebung der Sendevorrichtung (SV) befindliche mobile Kommunikationsendgeräte (MG) zu erkennen;
ein mobiles Kommunikationsendgerät (MG), eingerichtet zum Empfangen einer Warnmeldung (WM) und/oder des Identifizierungscodes, und eingerichtet zum Ausgeben der empfangenen Warnmeldung (WM), und/oder eingerichtet zum Ausgeben einer dem Identifizierungscode zugeordneten Warnmeldung;
eine Ausgabevorrichtung (AV) zum Ausgeben der Warnmeldung (WM), und
eine Bestimmungsvorrichtung (BV) zur Bestimmung eines Gefährdungskontextes basierend auf der aktuellen Position des mobilen Kommunikationsendgerätes (MG) und den Informationen zu der jeweiligen räumlichen Umgebung, wobei das Ausgeben der Warnmeldung (WM) basierend auf dem Gefährdungskontext erfolgt, wobei bei der Ermittlung des Gefährdungskontextes auch persönliche Daten des Benutzers berücksichtigt werden, und wobei das Ausgeben der Warnmeldung (WM) nur bei einem aktiven Gebrauch des Kommunikationsendgerätes (MG) durch den Benutzer erfolgt.

7. Anordnung nach Anspruch 6, weiter umfassend:
eine Lokalisierungsvorrichtung (POS, SAT) zum Bestimmen der aktuellen Position des mobilen Kommunikationsendgerätes (MG), wobei eine Ausgabe der Warnmeldung (WM) nur erfolgt, wenn sich das mobile Kommunikationsendgerät (MG) in einer vorher festgelegten Entfernung zur Sendevorrichtung (SV) befindet.

8. Anordnung nach Anspruch 6 oder 7, weiter umfassend:
eine Bereitstellungsvorrichtung (S) zum Bereitstellen von Informationen zu einer jeweiligen räumlichen Umgebung einer jeweiligen Sendevorrichtung (SV); und/oder zum Zuordnen einer Warnmeldung zu einem Identifizierungscode, wobei die Bereitstellungsvorrichtung (S) dazu eingerichtet ist, über geeignete Kommunikationsmechanismen (KV2) mit dem mobilen Kommunikationsendgerät (MG) zu kommunizieren.

9. Anordnung nach einem der Ansprüche 6 bis 8, wobei das mobile Kommunikationsendgerät (MG) eingerichtet ist, die Warnmeldung (WM) an ein weiteres mobiles Kommunikationsendgerät (MG1) weiterzuleiten.

10. Gebäudeautomatisierungssystem oder Überwachungssystem für Gebäude und/oder definierte Bereiche, umfassend eine Anordnung nach einem der Ansprüche 6 bis 9.

## Claims

1. Method for the output of warning messages (WM) to a mobile communication terminal device (MG) of a user (P), the warning messages (WM) being warnings of potential dangers in an immediate spatial environment of the mobile communication terminal device (MG), the method comprising the following steps:
Emitting a warning message (WM) by means of a transmitting device (SV) situated in the spatial environment of the potential danger;
Receiving the warning message (WM) by means of a receiving device of the mobile communication terminal device (MG); and
Outputting the warning message (WM) by means of the mobile communication terminal device (MG) to a suitable output device (AV), wherein based upon the current position of the mobile communication terminal device (MG), information regarding the respective immediate spatial environment of the mobile communication terminal device (MG) is called up from a database and a hazard context is determined therefrom, wherein the output of the warning message (WM) takes place on the basis of the hazard context, wherein in the detection of the hazard context, personal data of the user is also taken into account, and wherein the output of the warning message (WM) takes place only on active use of the communication terminal device (MG) by the user.

2. Method according to claim 1, the output of the warning message (WM) taking place on the basis of sensor values that are provided by a sensor system situated in the mobile communication terminal device (MG).

3. Method according to one of the preceding claims, the output of the warning message (WM) taking place on the basis of the current position of the mobile communication terminal device (MG) .

4. Method according to one of the preceding claims, the output of the warning message (WM) taking place on the basis of parameters pre-set by the user.

5. Method according to one of the preceding claims, the warning message (WM) being passed from the communication terminal device (MG) of a user (P) to a communication terminal device (MG1) of a further user (P1).

6. Arrangement for the output of warning messages (WM) to a mobile communication terminal device (MG) of a user (P), the warning messages (WM) being warnings of potential dangers in an immediate spatial environment of the mobile communication terminal device (MG), the arrangement comprising:
A transmitting device (SV) configured for emitting a warning message (WM) regarding a potential danger existing in the spatial environment of the transmitting device (SV) and/or configured for emitting an identification code associated with the transmitting device, the transmitting device (SV) being further configured to recognize mobile communication terminal devices (MG) situated in the spatial environment of the transmitting device (SV);
A mobile communication terminal device (MG), configured to receive a warning message (WM) and/or the identification code and configured to output the received warning message (WM) and/or configured to output a warning message associated with the identification code;
An output device (AV) for outputting the warning message (WM), and
A determination device (BV) for determining a hazard context based upon the current position of the mobile communication terminal device (MG) and the information regarding the respective spatial environment, the output of the warning message (WM) taking place on the basis of the hazard context, wherein in the detection of the hazard context, personal data of the user is also taken into account, and wherein the output of the warning message (WM) takes place only on active use of the communication terminal device (MG) by the user.

7. Arrangement according to claim 6, further comprising:
A localization device (POS, SAT) for determining the current position of the mobile communication terminal device (MG), an output of the warning message (WM) only taking place when the mobile communication terminal device (MG) is at a previously determined distance from the transmitting device (SV) .

8. Arrangement according to claim 6 or 7, further comprising:
A provision device (S) for providing information regarding a respective spatial environment of a respective transmitting device (SV); and/or for associating a warning message with an identification code, the provision device (S) being configured to communicate via suitable communication mechanisms (KV2) with the mobile communication terminal device (MG).

9. Arrangement according to one of the claims 6 to 8, the mobile communication terminal device (MG) being configured to pass on the warning message (WM) to a further mobile communication terminal device (MG1).

10. Building automation system or surveillance system for buildings and/or defined regions, comprising an arrangement according to one of the claims 6 to 9.

## Revendications

1. Procédé pour éditer des messages d'avertissement (WM) sur un terminal de communication mobile (MG) d'un utilisateur (P), où les messages d'avertissement (WM) sont des avertissements de dangers potentiels dans un environnement spatial immédiat du terminal de communication mobile (MG), le procédé comprenant les étapes suivantes :
émission d'un message d'avertissement (WM) par un dispositif émetteur (SV) se trouvant dans l'environnement spatial du danger potentiel,
réception du message d'avertissement (WM) par un dispositif récepteur du terminal de communication mobile (MG), et
édition du message d'avertissement (WM) par le terminal de communication mobile (MG) sur un dispositif d'édition approprié (AV), et selon lequel,
sur la base de la position instantanée du terminal de communication mobile (MG), des informations se rapportant à l'environnement spatial immédiat respectif du terminal de communication mobile (MG) sont consultées à partir d'une base de données, un contexte de danger est déterminé à partir de là, et l'édition du message d'avertissement (WM) s'effectue sur la base du contexte de danger, en prenant en compte en outre des données personnelles de l'utilisateur pour déterminer le contexte de danger, et l'édition du message d'avertissement (WM) s'effectue uniquement lors d'une utilisation active du terminal de communication (MG) par l'utilisateur.

2. Procédé selon la revendication 1, dans lequel l'édition du message d'avertissement (WM) s'effectue sur la base de valeurs de capteur qui sont fournies par un système capteur se trouvant dans le terminal de communication mobile (MG).

3. Procédé selon l'une quelconque des revendications précédentes, dans lequel l'édition du message d'avertissement (WM) s'effectue sur la base de la position instantanée du terminal de communication mobile (MG).

4. Procédé selon l'une quelconque des revendications précédentes, dans lequel l'édition du message d'avertissement (WM) s'effectue sur la base de paramètres préréglés par l'utilisateur.

5. Procédé selon l'une quelconque des revendications précédentes, dans lequel le message d'avertissement (WM) est transmis par le terminal de communication (MG) d'un utilisateur (P) sur un terminal de communication (MG1) d'un autre utilisateur (P1).

6. Agencement permettant d'éditer des messages d'avertissement (WM) sur un terminal de communication (MG) mobile d'un utilisateur (P), où les messages d'avertissement (WM) sont des avertissements de dangers potentiels dans un environnement spatial immédiat du terminal de communication mobile (MG), l'agencement comprenant :
un dispositif émetteur (SV) conçu pour émettre un message d'avertissement (WM) concernant un danger potentiel se trouvant dans l'environnement spatial du dispositif émetteur (SV) et/ou conçu pour émettre un code d'identification associé au dispositif émetteur, le dispositif émetteur (SV) étant conçu en outre pour détecter des terminaux de communication mobiles (MG) se trouvant dans l'environnement spatial du dispositif émetteur (SV),
un terminal de communication mobile (MG), configuré pour recevoir un message d'avertissement (WM) et/ou le code d'identification, et configuré pour éditer le message d'avertissement (WM) reçu et/ou configuré pour éditer un message d'avertissement associé au code d'identification, un dispositif d'édition (AV) pour éditer le message d'avertissement (WM), et
un dispositif de détermination (BV) pour déterminer un contexte de danger sur la base de la position instantanée du terminal de communication mobile (MG) et des informations sur l'environnement spatial respectif, et
selon lequel l'édition du message d'avertissement (WM) s'effectue sur la base du contexte de danger, et, lors de la détermination du contexte de danger, des données personnelles de l'utilisateur sont également prises en compte, et l'édition du message d'avertissement (WM) s'effectue uniquement lors d'une utilisation active du terminal de communication mobile (MG) par l'utilisateur.

7. Agencement selon la revendication 6, comprenant en outre :
un dispositif de localisation (POS, SAT) permettant de déterminer la position instantanée du terminal de communication mobile (MG), et selon lequel une édition du message d'avertissement (WM) est effectuée uniquement lorsque le terminal de communication mobile (MG) se trouve à une distance préalablement déterminée du dispositif émetteur (SV).

8. Agencement selon la revendication 6 ou 7, comprenant en outre :
un dispositif de fourniture (S) pour fournir des informations sur un environnement spatial respectif d'un dispositif émetteur (SV) respectif, et/ou pour affecter un message d'alarme à un code d'identification, le dispositif de fourniture (S) étant conçu de manière à communiquer avec le terminal de communication mobile (MG) via des mécanismes de communication (KV2) appropriés.

9. Agencement selon l'une des revendications 6 à 8, dans lequel le terminal de communication mobile (MG) est conçu de manière à transmettre le message d'avertissement (WM) à un autre terminal de communication mobile (MG1).

10. Système d'automatisation de bâtiments ou système de surveillance de bâtiments et/ou de secteurs définis, comprenant un agencement selon l'une des revendications 6 à 9.
